# EUROPEAN PATENT APPLICATION

(11) **EP 4 693 556 A1**
(43) Date of publication of application: **11.02.2026**
(21) Application number: 24890498.9
(22) Date of filing: 29.10.2024
(51) Int. Cl.: H01M 10/0525, H01M 10/0567, H01M 10/42, H01M 4/13

(54) **LITHIUM ION BATTERY AND ELECTRIC DEVICE**

(30) Priority: 15.11.2023 CN 202311525265
(71) Applicant: Contemporary Amperex Technology Co., Limited, Ningde, Fujian 352100 (CN)
(72) Inventor: WU, Kai, Ningde, Fujian 352100 (CN); YU, Honggang, Ningde, Fujian 352100 (CN); JIANG, Hao, Ningde, Fujian 352100 (CN); GAO, Jingyu, Ningde, Fujian 352100 (CN); YANG, Chenglong, Ningde, Fujian 352100 (CN); CHEN, Aosai, Ningde, Fujian 352100 (CN); ZHANG, Haiming, Ningde, Fujian 352100 (CN); JIN, Haizu, Ningde, Fujian 352100 (CN)
(74) Representative: Kraus & Lederer PartGmbB
(86) International application number: PCT/CN2024/128207
(87) International publication number: WO 2025/103141

(57) **Abstract**

The embodiments of the present application discloses a lithium-ion battery and an electrical apparatus. The lithium-ion battery includes an electrolyte solution. The electrolyte solution includes a metal ion, a Stokes radius of the metal ion is smaller than that of a lithium ion, a CB value of the lithium-ion battery satisfies: 1.06 ≤ CB ≤ 1.32, and the CB value is a ratio of a capacity of a negative-electrode active material per unit area to a capacity of a positive-electrode active material per unit area. The lithium-ion battery can effectively improve the lithium plating problem and enhance the fast charging performance of the lithium-ion battery.

## Description

### CROSS-REFERENCE TO RELATED APPLICATIONS

The patent document claims the priority and rights to Chinese Patent Application No. 202311525265.9 filed on November 15, 2023 and entitled "LITHIUM-ION BATTERY AND ELECTRICAL APPARATUS". The entire content of the aforementioned patent application is incorporated by reference as part of the disclosure of the present patent document.

### TECHNICAL FIELD

The present application relates to the technical field of batteries, and in particular relates to a lithium-ion battery and an electrical apparatus.

### BACKGROUND

In recent years, lithium-ion batteries are widely applied in hydropower, firepower, wind power and solar power stations, and the like energy storage power supply systems, as well as in many fields of electric tools, electric bicycles, electric motorcycles, electric vehicles, military equipment, aerospace and the like, thereby being greatly developed.

With people's continuous pursuit of life efficiency, the charging ability of the battery has become one of the important parameters to measure the quality of the battery. Therefore, it is crucial to the development of lithium-ion batteries how to improve the charging capacity of the lithium-ion batteries.

### SUMMARY

The present application is conducted in view of the aforementioned technical problems, and an objective of the present application is to provide a lithium-ion battery and an electrical apparatus. The lithium-ion battery can effectively uniform the current density of a negative electrode plate, improve a lithium plating problem, and give full play to the charging capacity of the lithium-ion battery.

In a first aspect, a lithium-ion battery is provided. The lithium-ion battery includes an electrolyte solution. The electrolyte solution includes a metal ion, a Stokes radius of the metal ion is smaller than that of a lithium ion, a CB value of the lithium-ion battery satisfies: 1.06 ≤ CB ≤ 1.32, and the CB value is a ratio of a capacity of a negative-electrode active material per unit area to a capacity of a positive-electrode active material per unit area.

In an embodiment of the present application, the CB value of the lithium-ion battery is set in an interval of 1.06-1.32. That is, the capacity of the negative-electrode active material per unit area on the negative electrode plate is greater than that of the positive-electrode active material per unit area on the positive electrode plate. In other words, the negative electrode plate has more lithium-ion active sites per unit area. When the lithium-ion battery is charged at a high rate, quick intercalation of a large number of lithium ions can be achieved, thereby reducing the risk of lithium plating in the lithium-ion battery. At the same time, the electrolyte solution of the lithium-ion battery includes a metal ion with a Stokes radius smaller than that of a lithium ion. When the lithium-ion battery is charged at a high rate, the metal ion can migrate to a place with higher current density faster than the lithium ion, thereby reducing the impact of uneven current density on fast charging performance and further reducing the risk of lithium plating in the lithium-ion battery. Therefore, the lithium-ion battery provided in the embodiment of the present application can effectively reduce lithium plating and give full play to the charging capacity of the lithium-ion battery.

In a possible implementation, a molar concentration C of the metal ion in the electrolyte solution satisfies: 0.012 M ≤ C ≤ 0.05 M.

In an embodiment of the present application, by controlling the molar concentration of the metal ion within a suitable range, the current density can be made more uniform, while reducing the effect of the metal ion on the viscosity of the electrolyte solution and helping to reduce concentration polarization inside the lithium-ion battery, thereby reducing lithium plating.

In a possible implementation, the metal ion includes at least one of K⁺ and Na⁺; and optionally, the metal ion includes K⁺.

In a possible implementation, the conductivity σ of the electrolyte solution at normal temperature satisfies: σ ≥ 6 mS·cm⁻¹.

In an embodiment of the present application, by controlling and selecting an electrolyte solution with higher conductivity, it helps to reduce the impedance of the lithium-ion battery, while helping to reduce the concentration polarization in the thickness direction of the electrode plate, thereby reducing the risk of lithium plating in the lithium-ion battery.

In a possible implementation, the viscosity η of the electrolyte solution at normal temperature satisfies: η ≤ 5 Pa·s.

In an embodiment of the present application, by selecting an electrolyte solution with smaller viscosity, the concentration polarization in the thickness direction of the electrode plate can be further reduced, thereby further reducing the risk of lithium plating in the lithium-ion battery.

In a possible implementation, the lithium-ion battery includes a negative electrode plate, and the negative electrode plate includes a negative-electrode current collector and a negative-electrode film layer disposed on the negative-electrode current collector.

In a possible implementation, the thickness h of the negative-electrode film layer satisfies: 25 µm ≤ h ≤ 60 µm.

In an embodiment of the present application, by controlling the thickness of the negative-electrode film layer within a suitable range, it helps to reduce the polarization of the lithium-ion battery and improve the charging capacity of the lithium-ion battery.

In a possible implementation, a load m of the negative-electrode film layer on the negative-electrode current collector satisfies: 4 mg·cm⁻² ≤ m ≤ 10 mg·cm⁻².

In an embodiment of the present application, by controlling the load of the negative-electrode film layer on the negative-electrode current collector within a suitable range, the lithium-ion battery can have both high energy density and good charging ability.

In a second aspect, an electrical apparatus is provided, which includes the lithium-ion battery according to any possible implementation of the first aspect.

### BRIEF DESCRIPTION OF DRAWINGS

In order to explain the technical solution of the embodiments of the present application more clearly, the drawings that should be used in the embodiments of the present application will be briefly introduced hereafter. Obviously, the drawings described hereafter are only some embodiments of the present application, and for those of ordinary skills in the art, other drawings can be obtained according to these drawings without paying creative labor.
FIG. 1 is a schematic diagram of a battery cell.
FIG. 2 is a schematic diagram of a battery module.
FIG. 3 is a schematic diagram of a battery.
FIG. 4 is another schematic diagram of a battery.

### DETAILED DESCRIPTION

Hereinafter, the embodiments of the lithium-ion battery and the electrical apparatus of the present application are specifically disclosed by referring to the detailed description of the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when a parameter is expressed as an integer ≥ 2, it is equivalent to disclosing that the parameter is, for example, an integer of 2, 3, 4, 5, 6, 7, 8, 9, 10, 11, 12, etc.

In the description of the present application, it needs to be noted that unless otherwise specified, the "plurality of" means two or more; and the directions or position relationships indicated by the terms "above", "below", "left", "right", "inner", "outer", etc., are only provided to facilitate the description of the present application and simplify the description, rather than indicating or implying that the apparatus or element referred to must have a specific direction, or be constructed and operated in a specific direction, and therefore cannot be construed as limiting the present application. Moreover, the terms "first", "second", "third" etc. are only used for descriptive purposes, and cannot be understood as indicating or implying relative importance.

Unless otherwise specifically specified, in the present application, the phrase "A and/or B" means "A, B, or both A and B". More specifically, the condition "A and/or B" is satisfied by any of the following: A is true (or present) and B is false (or absent); A is false (or absent) and B is true (or present); or both A and B are true (or present).

Unless otherwise specified, all the steps in the present application can be carried out, either in order or randomly, preferably in order. For example, the method includes steps (a) and (b), which means that the method may comprise steps (a) and (b) performed in order, or may comprise steps (b) and (a) performed in order. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specified, all the embodiments and optional embodiments of the present application can be combined with each other form new technical solutions.

Unless otherwise particularly specified, the following terms have the following meanings. Any undefined terms have their technically accepted meanings.

If mentioned, the "Stokes radius" refers to the ratio of resistance coefficient to particle radius when particles performs a Newton fluid motion in a fluid, also known as the effective radius of particles in a solution, or the radius of solvated ions. The larger the Stokes radius of a particle, the greater the resistance it encounters when moving in the fluid and the weaker its migration ability.

If mentioned, the "CB (Cell balance) value" refers to the ratio of the negative electrode capacity to the positive electrode capacity on opposite sides of the battery, also known as a N/P (Negative/Positive) ratio. In other words, the CB value is equal to the ratio of the capacity of the negative-electrode active material per unit area to the capacity of the positive-electrode active material per unit area.

Hereafter, embodiments of the present invention will be introduced.

In recent years, secondary batteries have been widely used in many fields, e.g., power tools, electronic products, electric vehicles, and aerospace, due to their relatively high energy density and relatively long service life, so that they have achieved great development. Generally, the secondary battery includes a positive electrode plate, a negative electrode plate, an electrolyte solution, and a separator. During the charging and discharging process of the battery, active ions are intercalated and deintercalated back and forth between the positive electrode plate and the negative electrode plate. The electrolyte solution serves to conduct active ions between the positive electrode plate and the negative electrode plate. The separator is disposed between the positive electrode plate and the negative electrode plate to enable active ions to pass through while preventing the positive electrode plate and negative electrode plate from short circuit, so that the electrochemical reaction in the secondary battery occurs normally.

Taking a lithium-ion battery as an example, the lithium-ion battery, a typical secondary battery, is also known as a rocking chair battery due to the fact that it is charged and discharged relying on a chemical reaction of deintercalation of lithium ions between the positive electrode and the negative electrode. During the charging process of the lithium-ion battery, lithium ions are deintercalated from a positive-electrode active material, moved to the negative electrode by conduction in the electrolyte solution, and then intercalated into a negative-electrode active material; and during the discharging process, the lithium ions are deintercalated from the negative-electrode active material, moved to the positive electrode by conduction in the electrolyte solution, and then intercalated into the positive-electrode active material.

It is to be understood that, the process of "lithium intercalation" and "intercalation" described in the present application refers to a process in which lithium ions are intercalated in the positive-electrode active material or the negative-electrode active material due to an electrochemical reaction, and the process of "deintercalation", "lithium deintercalation", and "deintercalated" described in the present application refers to a process in which lithium ions are deintercalated from the positive-electrode active material or the negative-electrode active material due to an electrochemical reaction.

As the application scope of lithium-ion batteries becomes wider and wider and the usage scenarios thereof become more and more diverse, new requirements are put forward for the charging capacity of lithium-ion batteries. In some usage scenarios, lithium-ion batteries are required to have stable high-current charging capabilities. When lithium-ion batteries are charging, lithium plating may occur in the negative electrode plate due to a variety of factors, such as concentration polarization inside the battery and low CB values in local areas caused by process limitations. For high-capacity and high-energy-density lithium-ion batteries, both the thickness of the electrode plate and the load of the active material on the electrode plate are higher than those of ordinary lithium-ion batteries, and the risk of lithium plating on the negative electrode plate is higher during the cycling process. Therefore, in order to protect the battery and improve the safety of the battery, the actual charging capacity (e.g., the charging rate) of the lithium-ion battery often cannot reach its theoretical value, resulting in a loss of the charging capacity.

In view of this, an embodiment of the present application provides a lithium-ion battery and an electrical apparatus. The CB value of the lithium-ion battery is set to 1.06-1.32, the negative electrode has more lithium intercalation sites, and the electrolyte solution of the lithium-ion battery contains a metal ion with a Stokes radius smaller than that of a lithium ion, which can help to improve the uniformity of the current density of the negative electrode plate, reduce the polarization of the lithium-ion battery, reduce the risk of lithium plating of the negative electrode plate, and give full play to the charging performance of the lithium-ion battery, thereby improving the charging performance of the lithium-ion battery.

Generally, the lithium-ion battery includes a positive electrode plate, a negative electrode plate, an electrolyte solution and a separator. The lithium-ion battery and various parts of the lithium-ion battery provided in the present application will be introduced hereafter.

First, a lithium-ion battery is provided. The lithium-ion battery includes an electrolyte solution. The electrolyte solution includes a metal ion, a Stokes radius of the metal ion is smaller than that of a lithium ion, and a CB value of the lithium-ion battery satisfies: 1.06 ≤ CB ≤ 1.32.

Specifically, during designing of the electrode plate, the CB value of the lithium-ion battery can be controlled within the range of 1.06-1.32 by selecting a negative-electrode active material with a higher capacity and increasing the load of the active material on the negative electrode plate, etc. The CB value may be: 1.06, 1.08, 1.1, 1.12, 1.14, 1.16, 1.18, 1.2, 1.22, 1.24, 1.26, 1.28, 1.3, 1.32, or its numerical value is within a range obtained by combining any two of the aforementioned numerical values.

On one hand, if the CB value is greater than 1, the capacity of the negative-electrode active material per unit area is greater than that of the positive-electrode active material per unit area, and there are more lithium-ion active sites on the negative electrode plate. When charging is conducted with a large current, a large number of lithium ions that move to the negative electrode plate can be quickly intercalated in the negative-electrode active material, thereby improving the lithium ion intercalation efficiency and thus reducing the risk of lithium plating at the negative electrode during high current charging. On the other hand, if the CB value is too large, more lithium ions will participate in the formation of a SEI film during the chemical formation process of the lithium-ion battery, which is not conducive to the first-cycle coulomb efficiency of the lithium-ion battery. By controlling the CB value of the lithium-ion battery within the range of 1.06-1.32, it helps to reduce the risk of lithium plating in the fast charging process of the lithium-ion battery. At the same time, a metal ion is introduced into the electrolyte solution of the lithium-ion battery. The Stokes radius of the metal ion is smaller than that of the lithium ion. Therefore, the migration rate of the metal ion in the electrolyte solution is faster than that of the lithium ion. In a case where uneven current density occurs in the negative electrode plate, the metal ion can move to the place with higher current density faster than the lithium ion, thereby uniforming the current density of the negative electrode plate and making the distribution of the lithium ion on the surface of the negative electrode plate more uniform, and thus further reducing the risk of lithium plating on the negative electrode plate.

Therefore, the lithium-ion battery provided in the embodiment of the present application can effectively reduce the risk of lithium plating when the lithium-ion battery is charged with a high current by controlling the range of the CB value in combination with an electrolyte solution including the aforementioned metal ion, thereby giving full play to the charging performance of the lithium-ion battery.

In one embodiment, the molar concentration C of the metal ion in the electrolyte solution satisfies: 0.012 M ≤ C ≤ 0.05 M.

Specifically, the molar concentration C of the metal ion in the electrolyte solution can be: 0.012 M, 0.014 M, 0.016 M, 0.018 M, 0.02 M, 0.022 M, 0.024 M, 0.026 M, 0.028 M, 0.03 M, 0.032 M, 0.034 M, 0.036 M, 0.038 M, 0.04 M, 0.042 M, 0.044 M, 0.046 M, 0.048 M, 0.05 M, or its numerical value is within a range obtained by combining any two of the aforementioned numerical values.

By adding the metal ion with a Stokes radius smaller than that of the lithium ion into the electrolyte solution, the current density on the negative electrode plate can be effectively uniformed, thereby reducing the risk of lithium plating on the negative electrode plate. If the molar concentration of the metal ion is too small, there are fewer metal ions in the electrolyte solution, and the inhibitory effect on lithium plating is limited; and if the concentration of the metal ion is too high, there are too many metal ions in the electrolyte solution, which may increase the viscosity of the electrolyte solution. Based on this, the embodiment of the present application can reduce the influence of the metal ion on the viscosity of the electrolyte solution while effectively suppressing lithium plating, by controlling the concentration of the metal ion within the range of 0.012 M-0.05 M.

In an embodiment, the metal ion includes at least one of K⁺ and Na⁺; and optionally, the metal ion includes K⁺.

Specifically, the Stokes radius of the lithium ion is typically 4.8 Å, the Stokes radius of the sodium ion is typically 4.6 Å, and the Stokes radius of the potassium ion is typically 3.6 Å. Taking the potassium ion as an example, the possible mechanism by which the aforementioned metal ion can uniform the current density of the negative electrode plate and improve lithium plating is explained as follows: although it has more electron layers than the lithium ion and a larger ion radius than the lithium ion, the number of positive charges carried by the potassium ion and the lithium ions is the same, and the ion radius of the potassium ions is larger. Therefore, its electric field strength is weaker than that of the lithium ion, and its attraction to the negatively charged groups of solvent molecules is weaker. Therefore, its Stokes radius is smaller than that of the lithium ion, and it has a higher migration rate in the solution. When too high local current density occurs on the negative electrode plate, the metal ion can move to a position where the current density is too high faster than the lithium ion, thereby uniforming the current density at that position. Thus, the influence of the uneven current density of the negative electrode plate on the distribution of the lithium ion on the surface of the negative electrode plate is reduced, and the lithium plating at the position where the local current density is too high due to the uneven distribution of the lithium ion on the surface of the negative electrode plate is effectively improved.

In an embodiment, the conductivity σ of the electrolyte solution at normal temperature satisfies: σ ≥ 6 mS·cm⁻¹.

Specifically, the conductivity of the electrolyte solution at normal temperature can be: 6 mS·cm⁻¹, 7 mS·cm⁻¹, 8 mS·cm⁻¹, 9 mS·cm⁻¹, 10 mS·cm⁻¹, 11 mS·cm⁻¹, 12 mS·cm⁻¹, 13 mS·cm⁻¹, 14 mS·cm⁻¹, 15 mS·cm⁻¹, 16 mS·cm⁻¹, 17 mS·cm⁻¹, 18 mS·cm⁻¹, 19 mS·cm⁻¹, 20 mS·cm⁻¹, etc.

The conductivity of the electrolyte solution can be controlled by regulating parameters such as the solvent and solute of the electrolyte solution and their respective concentrations. In a case where the negative electrode plate is thicker, the difference in wettability of the electrolyte solution in the thickness direction of the negative electrode plate is amplified, and the concentration polarization of the negative electrode plate in the thickness direction will also increase. Based on this, in the embodiments of the present application, by selecting an electrolyte solution with a conductivity greater than or equal to 6 mS·cm⁻¹, the electrolyte solution with a higher conductivity can improve the concentration polarization in the thickness direction of the negative electrode plate. Also, an electrolyte solution with a higher conductivity can reduce the liquid phase transmission impedance inside the lithium-ion battery, thereby reducing the impedance inside the lithium-ion battery.

It should be understood that normal temperature can be understood as room temperature. For example, the normal temperature in China is usually around 20°C-25°C. Also for example, the normal temperature in Russia is usually around 10°C. The aforementioned temperature range is only an example and does not constitute a limitation on "normal temperature".

In one embodiment, the viscosity η of the electrolyte solution at normal temperature satisfies: η ≤ 5 Pa·s.

Specifically, the viscosity η of the electrolyte solution at normal temperature may be 3 Pa·s, 3.2 Pa·s, 3.4 Pa·s, 3.6 Pa·s, 3.8 Pa·s, 4 Pa·s, 4.2 Pa·s, 4.4 Pa·s, 4.6 Pa·s, 4.8 Pa·s, 5 Pa·s, or its numerical value is within a range obtained by combining any two of the aforementioned numerical values.

The viscosity of the electrolyte solution can be regulated by regulating the type of the solute or solvent in the electrolyte solution, the concentration of the solute, and the concentration of the metal ion. Under normal circumstances, the viscosity of the electrolyte solution affects the wettability of the electrode plate in the electrolyte solution. The better the wettability of the electrode plate, the higher its ion transmission efficiency and the smaller the impedance. Therefore, in the embodiments of the present application, by selecting an electrolyte solution with lower viscosity, the wettability of the negative electrode plate in the electrolyte solution can be improved, the concentration polarization in the thickness direction of the negative electrode plate can be reduced, and the risk of lithium plating of the negative electrode plate during high current charging can be reduced, thereby giving full play to the charging performance of the lithium-ion battery and further improving the charging capacity of the lithium-ion battery.

Therefore, the lithium-ion battery provided in the embodiment of the present application can uniform the current density on the negative electrode plate, and has the charging capability of charging to 35% SOC at a high rate (for example, 4 C) without lithium plating.

Hereafter, the positive electrode plate, the negative electrode plate, the separator, and the electrolyte solution of the lithium-ion battery are introduced in detail.

### [Negative electrode plate]

The negative electrode plate generally include a negative-electrode current collector, and a negative-electrode film layer disposed on at least one surface of the negative-electrode current collector. The negative-electrode film layer includes a negative-electrode active material.

As an example, the negative-electrode current collector has two opposite surfaces in its own thickness direction, and the negative-electrode film layer is disposed on either or both of the two opposite surfaces of the negative-electrode current collector.

In an embodiment, the thickness h of the negative-electrode film layer satisfies: 25 µm ≤ h ≤ 60 µm.

Specifically, the thickness of the negative-electrode film layer may be 25 µm, 28 µm, 30 µm, 32 µm, 34 µm, 36 µm, 38 µm, 40 µm, 42 µm, 44 µm, 46 µm, 48 µm, 50 µm, 52 µm, 54 µm, 56 µm, 58 µm, 60 µm, or its numerical value is within a range obtained by combining any two of the aforementioned numerical values.

The thickness of the negative-electrode film layer has a certain influence on the charging capacity of the lithium-ion battery. The reason is that: the smaller the thickness of the negative-electrode film layer, the more conducive it is to the diffusion and infiltration of the electrolyte solution, which can reduce the concentration polarization in the thickness direction of the negative electrode plate, and reduce the risk of lithium plating when the negative electrode plate is charged with a high current, which is conducive to the charging capacity of the lithium-ion battery. Moreover, the thickness of the negative-electrode film layer also has a certain influence on the energy density of the lithium-ion battery. Under the same powder compaction density, the thicker the negative-electrode film layer, the higher the load of the active material on the negative electrode plate, and the greater the energy density of the lithium-ion battery. Based on this, the embodiments of the present application facilitate the lithium-ion battery to have both high energy density and good charging capacity by controlling the thickness of the negative-electrode film layer within a suitable range.

In an embodiment, the load m of the negative-electrode film layer on the negative-electrode current collector satisfies: 4 mg·cm⁻² ≤ m ≤ 10 mg·cm⁻².

Specifically, the load m of the negative-electrode film layer on the negative-electrode current collector may be: 4 mg·cm⁻², 4.5 mg·cm⁻², 5 mg·cm⁻², 5.5 mg·cm⁻², 6 mg·cm⁻², 6.5 mg·cm⁻², 7 mg·cm⁻², 7.5 mg·cm⁻², 8 mg·cm⁻², 8.5 mg·cm⁻², 9 mg·cm⁻², 9.5 mg·cm⁻², 10 mg·cm⁻², or its numerical value is within a range obtained by combining any two of the aforementioned numerical values.

The charging capacity of lithium-ion battery is affected not only by the thickness of the negative-electrode film layer, but also by the porosity. Generally speaking, the larger the porosity of the negative-electrode film layer, the more conducive it is to the diffusion and infiltration of the electrolyte solution, the smaller the concentration polarization, and the better the charging capacity of the lithium-ion battery. On the other hand, in a case where the thickness of the negative-electrode film layer is constant, the greater the powder compaction density, the lower the porosity, the greater the load of the negative-electrode film layer on the negative-electrode current collector, and the greater the energy density of the lithium-ion battery. Based on this, in the embodiments of the present application, by controlling the load of the negative-electrode film layer on the negative-electrode current collector within a suitable range, which is equivalent to indirectly controlling the porosity of the negative-electrode film layer, it facilitates the lithium-ion battery to have both high energy density and good charging capacity.

In a case where the negative-electrode film layer is controlled to satisfy the aforementioned thickness and load at the same time, it is equivalent to taking into account the porosity and thickness of the negative-electrode film layer at the same time, which enables the lithium-ion battery to have both better charging capacity and energy density.

In one embodiment, the negative-electrode current collector can be a metal foil or a composite current collector. For example, a copper foil can be used as the metal foil. The composite current collector may include a polymer base layer and a metal layer formed on at least one surface of the polymer substrate. The composite current collector can be formed by forming a metal material (copper, copper alloy, nickel, nickel alloy, titanium, titanium alloy, silver and silver alloy, etc.) on the polymer base layer (e.g., polypropylene (PP), polyethylene terephthalate (PET), polybutylene terephthalate (PBT), polystyrene (PS), polyethylene (PE), etc.).

In one embodiment, a negative-electrode active material for the battery well known in the art can be used as the negative-electrode active material. As an example, the negative-electrode active material may include at least one of the following materials: artificial graphite, natural graphite, soft carbon, hard carbon, silicon-based materials, tin-based materials, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, the present application is not limited to these materials, and other conventional materials useful as negative electrode active materials for batteries can also be used. These negative-electrode active materials may be used alone or in combination of two or more thereof.

In one embodiment, the negative-electrode film layer further includes a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In one embodiment, the negative-electrode film layer further includes a conductive agent. The conductive agent may be selected from at least one of superconducting carbon, acetylene black, carbon black, Ketjen black, carbon dot, carbon nanotubes, graphene, and carbon nanofibers.

In one embodiment, the negative-electrode film layer further includes other adjuvants, for example, a thickener (e.g., sodium carboxymethylcellulose (CMC-Na)) and the like.

In one embodiment, the negative electrode plate can be prepared by the following manner: forming a negative-electrode slurry from the aforementioned components for preparing a negative electrode plate. For example, the negative-electrode active material, the conductive agent, the binder, and any other component are dispersed in a solvent (e.g., N-methyl pyrrolidone) to form a negative-electrode slurry. Then, the negative-electrode slurry is coated on the negative-electrode current collector, followed by procedures such as oven-drying and cold pressing, to obtain the negative electrode plate.

### [Positive electrode plate]

The positive electrode plate includes a positive-electrode current collector and a positive-electrode film layer disposed on at least one surface of the positive-electrode current collector, and the positive-electrode film layer includes a positive-electrode active material.

As an example, the positive-electrode current collector has two opposite surfaces in its own thickness direction, and the positive-electrode film layer is arranged on either or both of the opposite surfaces of the positive-electrode current collector.

In one embodiment, the positive-electrode current collector can be a metal foil or a composite current collector. For example, as the metal foil, an aluminum foil can be used. The composite current collector may include a polymer base layer and a metal layer formed on at least one surface of the polymer base layer. The composite current collector can be formed by forming a metal material (aluminum, aluminum alloys, nickel, nickel alloys, titanium, titanium alloys, silver and silver alloys, etc.) on a polymer material substrate (such as polypropylene (PP), polyethylene terephthalate (PET), polybutylene terephthalate (PBT), polystyrene (PS), polyethylene (PE), etc.).

In one embodiment, the positive-electrode active material can be a positive-electrode active material well known in the art for batteries. As an example, the positive active material may include at least one of the following materials: a lithium-containing phosphate with an olivine structure, a lithium transition metal oxide, and respective modified compounds thereof. However, the present application is not limited to these materials, and other conventional materials that can be used as positive-electrode active materials for batteries may also be used. These positive-electrode active materials may be used alone or in combination of two or more thereof. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium-nickel-cobalt-aluminum oxide (such as LiNi_{0.85}Co_{0.1}Al_{0.05}O₂) and modified compounds thereof. Examples of the lithium-containing phosphate with an olivine structure may include, but are not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. The charging and discharging process of the battery is accompanied by deintercalation and consumption of Li, and the molar content of Li in the positive-electrode active material varies as the state to which the battery is discharged varies. In the enumeration of positive-electrode active materials in the present application, the molar content of Li is an initial state of the material, that is, a state before feeding. The positive-electrode active material is applied in a battery system, and the molar content of Li changes after charge-discharge cycles. In the enumeration of positive-electrode active materials in the present application, the molar content of O is only a theoretical state value. The release of oxygen from a lattice will cause the molar content of O to change. The actual molar content of O will fluctuate.

In one embodiment, the positive-electrode film layer further includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In one embodiment, the positive-electrode film layer further includes a conductive agent. As an example, the conductive agent may include at least one of superconducting carbon, acetylene black, carbon black, Ketjen black, carbon dot, carbon nanotubes, graphene, and carbon nanofibers.

In one embodiment, the positive electrode plate can be prepared by forming a positive-electrode slurry from the above components for preparing a positive electrode plate. For example, the first positive-electrode active material and/or second positive-electrode active material, the conductive agent, the binder, and any other components are dispersed in a solvent (e.g., N-methyl pyrrolidone) to form a positive-electrode slurry. Then, the positive-electrode slurry is applied to a positive-electrode current collector, followed by procedures such as drying and cold rolling, to provide the positive electrode plate.

### [Electrolyte solution]

The electrolyte solution plays a role in conducting ions between the positive electrode plate and the negative electrode plate. The present application has no specific limitation on the type of the electrolyte solution, and it can be selected according to requirements. The electrolyte solution includes an electrolyte salt, a solvent and a metal ion, and a Stokes radius of the metal ion is smaller than that of the lithium ion.

In one embodiment, the electrolyte salt may be at least one selected from lithium hexafluorophosphate, lithium tetrafluoroborate, lithium perchlorate, lithium hexafluoroarsenate, lithium bis(fluorosulfonyl)imide, bistrifluoromethanesulfonimide lithium, lithium trifluoromethanesulfonate, lithium difluorophosphate, lithium difluorooxalate borate, lithium dioxalate borate, lithium difluoro dioxalate borate, and lithium tetrafluorooxalate phosphate.

In one embodiment, the solvent can be at least one selected from ethylene carbonate, propylene carbonate, ethyl methyl carbonate, diethyl carbonate, dimethyl carbonate, dipropyl carbonate, methylpropyl carbonate, ethylpropyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone and diethyl sulfone.

In one embodiment, the metal ion is provided by an inorganic salt. In other words, the electrolyte solution includes an inorganic salt including the metal ion and an anion. Illustrately, the anion includes at least one of hexafluorophosphate, tetrafluoroborate, perchlorate, nitrate, carbonate, bistrifluoromethylsulfonyl imide, trifluoromethanesulfonate, difluoro oxalate borate, dioxalate borate, methanesulfonate and a halogen anion.

In one embodiment, the electrolyte solution may further include an additive, and the additive may include a negative-electrode film-forming additive, or a positive-electrode film-forming additive, or may include an additive that capable of improving some performances of the battery, e.g., an additive for improving the overcharge performance of the battery, an additive for improving the high-temperature performance or low-temperature performance of the battery, and the like.

### [Separator]

In one embodiment, the battery further comprises a separator. The type of the separator is not particularly limited in the present application, and for example, any well-known separator film having good chemical stability, mechanical stability, and a porous structure can be selected.

In one embodiment, the material of the separator film can be selected from at least one of glass fibers, non-woven fabric, polyethylene, polypropylene, and polyvinylidene fluoride. The separator film can be either a single-layer thin film or a multi-layer composite thin film without special limitations. When the separator is a multi-layer composite thin film, the material of each layer may be the same or different, and there is no particular limitation on it.

In one embodiment, the negative electrode plate, the positive electrode plate and the separator can be made into an electrode assembly by a winding process or a lamination process.

In one embodiment, the battery cell may include an outer package. The outer package can be used for encapsulating the above-mentioned electrode assembly and electrolyte solution.

In one embodiment, the outer package of the battery cell can be a hard shell, e.g. a hard plastic shell, an aluminum shell, a steel shell, etc. The outer package of the battery cell may also be a soft package, e.g. a bag-type soft package. The material of the soft package can be plastic, and as the plastic, polypropylene, polybutylene terephthalate, polybutylene succinate and the like can be listed.

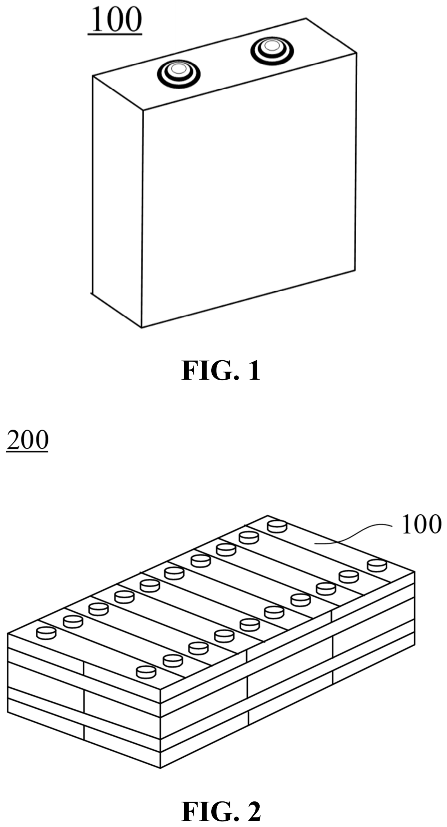

The present application has no specific limitation on the shape of the battery cell, which can be cylindrical, square or any other shape. For example, FIG. 1 shows a battery cell 100 in a square structure as an example.

It should be understood that the battery cell 100 may include the lithium-ion battery in the foregoing embodiment.

FIG. 2 shows a battery module 200 as an example. Referring to FIG. 2, in the battery module 200, multiple battery cells 100 may be sequentially arranged along a length direction of the battery module 200. Of course, they can also be arranged in any other way. The multiple battery cells 100 can be further fixed by fasteners. The multiple battery cells 100 may be battery cells 100 of the same chemical system, or battery cells 100 of different chemical systems.

Optionally, in one embodiment, the battery module 200 may further include a shell having an accommodating space, and the plurality of battery cells 100 are accommodated in the accommodating space.

Optionally, in one embodiment, the aforementioned battery module 200 can be further assembled into a battery, the number of battery modules 200 included in the battery can be one or more, and the specific number can be selected by those skilled in the art based on the application and capacity of the battery.

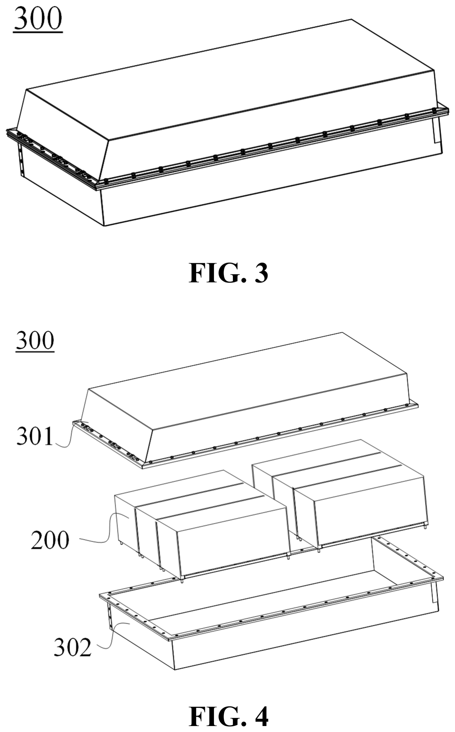

FIGs. 3 and 4 show a battery pack 300 as an example. Referring to Figs. 3 and 4, the battery pack 300 may include a battery box and multiple battery modules 200 disposed in the battery box. The battery box includes an upper box body 301 and a lower box body 302, the upper box body 301 can cover the lower box body 302 to form a closed space for accommodating the battery modules 200. The multiple battery modules 200 may be arranged in the battery box in any manner.

It should be understood that, the battery cells 100 may first be assembled into a battery module 200, and the battery pack 300 is assembled from the battery modules 200. Alternatively, the battery pack 300 may be directly assembled from the battery cells 100, with omission of the intermediate form of the battery modules 200.

Moreover, the present application further provides an electrical apparatus. The electrical apparatus includes the lithium-ion battery in the foregoing embodiment.

In another embodiment, the electrical apparatus includes at least one of the battery cell 100, the battery module 200, or the battery pack 300 provided by the present application. The battery cell 100, the battery module 200, or the battery pack 300 may be used as a power source of the electrical apparatus, or may be used as an energy storage unit of the electrical apparatus. The electrical apparatus may include, but is not limited to, a mobile device (e.g. a mobile phone, and a laptop, etc.), an electric vehicle (e.g. an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the numbers of the battery cell 100, the battery module 200, or the battery pack 300 can be selected according to use requirements of the electrical apparatus.

It is an electrical apparatus as an example. The electrical apparatus is an all-electric vehicle, a hybrid electric vehicle, a plug-in hybrid electric vehicle, etc. To satisfy the need of the electrical apparatus for a high power and high energy density of secondary batteries, a battery pack or a battery module can be used.

The device used as another example can be, for example, a mobile phone, a tablet computer, a laptop, etc. The device is generally required to be light and thin and can use a secondary battery as a power source.

Embodiments of the present application are described below. The Examples described below are illustrative and only used to explain the present application, and cannot be construed as limiting the present application. In Examples in which no specific technologies or conditions are specified, technologies or conditions described in the literature in the art or product specifications are followed. All of the used agents or instruments which are not specified with the manufacturer are conventional commercially-available products.

### [Examples 1-10 and Comparative Example 1]

### Example 1

### (1) Preparation of negative electrode plate

Artificial graphite as a negative-electrode active material (Dv50 = 15 µm), acetylene black as a conductive agent, styrene butadiene rubber as a binder, and sodium carboxymethyl cellulose as a thickener were dissolved in deionized water as a solvent at a mass ratio of 94:1:3:2, and uniformly mixed to obtain a negative-electrode slurry. Then, the negative-electrode slurry was uniformly coated onto a copper foil as a negative-electrode current collector. Then it was subjected to oven-drying, roller pressing, and slitting to obtain a negative electrode plate.

### (2) Preparation of a positive electrode plate

LiNi₅Co₂Mn₃O₂ as a positive-electrode active material, a carbon nanotube as a conductive agent, and polyvinylidene fluoride as a binder were dissolved in N-methyl pyrrolidone as a solvent at a mass ratio of 96:2:2, and uniformly mixed to obtain a positive-electrode slurry with a solid content of 50%. Then, the positive-electrode slurry was uniformly coated onto a aluminum foil as a positive-electrode current collector. Then it was subjected to oven-drying, roller pressing, and slitting to obtain a positive electrode plate.

### (3) preparation of electrolyte solution

In an argon atmosphere glove box (H₂O < 0.1 ppm, O₂ < 0.1 ppm), the electrolyte solution was formulated. The specific process was: organic solvents ethylene carbonate (EC), dimethyl carbonate (DMC) and diethyl carbonate (DEC) were uniformly mixed, and then added with appropriate amounts of lithium hexafluorophosphate (LiPF₆) and potassium hexafluorophosphate (KPF₆), so that the molar concentration of LiPF₆ was 1 M and the molar concentration of KPF₆ was 0.03 M.

### (4) Preparation of reference electrode

A copper wire with a diameter of 0.5 mm was soaked in concentrated sulfuric acid for 2 h, and then the surface of the copper wire was washed with deionized water and ethanol respectively. The washed copper wire was then placed in an oven at 60°C and oven-dried for 6 h, and welded to a nickel tab to prepare a reference electrode.

### (5) Preparation of lithium-ion battery

(5.1) The positive electrode plate, the separator, and the negative electrode plate were sequentially stacked, so that the separator was located between the positive electrode plate and the negative electrode plate and can isolate the positive electrode plate from the negative electrode plate; and then the aforementioned stacked components were winded and placed in a case, dried, and then injected with an electrolyte solution to obtain the lithium-ion battery of Example 1.

(5.2) The positive electrode plate, the separator, the reference electrode, the separator, and the negative electrode plate of specific dimensions were sequentially stacked, so that the reference electrode was located between two layers of separators; and then the aforementioned stacked components were placed in a case, dried, and injected with an electrolyte solution to obtain the reference battery of Example 1.

The aforementioned lithium-ion battery and reference battery were chemically formed under the following specific chemical formation conditions: a blue electric test system was used, the positive and negative electrodes were connected, allowed to stand for 1 min, and then charged to 4.2 V at a constant current of 0.1 C, then charged at a constant voltage of 4.2 V with a cutoff current of 0.02 C, then allowed to stand for 10 min, discharged at a constant current of 0.1 C with a cutoff voltage of 2.5 V, and then allowed to stand for 48 h. A SEI film was formed during the chemical formation of the battery, which helped to reduce the polarization of the battery.

### (6) Lithium plating on reference electrode

Before a performance test was conducted on the reference battery, it was also necessary to activate the reference electrode of the reference battery. Specifically, the reference electrode of the reference battery needed to be plated with lithium. The specific process of lithium plating was that: the positive electrode was connected to the reference electrode, charged at a constant current of 20 µA for 2 h, and allowed to stand for 5 min, and the negative electrode was connected to the reference electrode, and discharged at a constant current of 20 µA for 2 h to complete the lithium plating of the reference electrode. The reference electrode after the lithium plating could also be called a lithium metal electrode. The voltage of the negative electrode of the reference battery after lithium plating to the lithium metal electrode was 40 mV-400 mV, which was considered as that the activation of the reference electrode was completed.

By setting up a lithium-ion battery and a corresponding reference battery, the lithium-ion battery and the reference battery were tested for charging capacities simultaneously. The performance of the lithium-ion battery represented the actual performance of the lithium-ion battery under the condition; and the performance of the reference battery represented the theoretical performance of the lithium-ion battery under the condition.

Thus, the CB value of the prepared lithium-ion battery and reference battery in Example 1 was set to 1.12, the metal ion was K⁺, the molar concentration of K⁺ in the electrolyte solution was C = 0.03 M, the conductivity of the electrolyte solution was σ = 9.5 mS·cm⁻¹, the viscosity η = 3.9 Pa·s, the thickness h of the negative-electrode film layer = 54 µm, and the load m of the negative-electrode film layer on the negative-electrode current collector = 8.6 mg·cm⁻²

### Example 2

Compared with Example 1, in the lithium-ion battery and the reference battery of Example 2, CB = 1.06.

### Example 3

Compared with Example 1, in the lithium-ion battery and the reference battery of Example 3, CB = 1.24.

### Example 4

Compared with Example 1, in the lithium-ion battery and the reference battery of Example 4, CB = 1.32.

### Example 5

Compared with Example 1, in the lithium-ion battery and the reference battery of Example 5, C = 0.012 M, and σ = 9.7 mS·cm⁻¹.

### Example 6

Compared with Example 1, in the lithium-ion battery and the reference battery of Example 6, C = 0.05 M, and σ = 9.1 mS·cm⁻¹.

### Example 7

Compared with Example 1, in the lithium-ion battery and the reference battery of Example 7, the metal lithium ion in the electrolyte solution was Na⁺.

### Example 8

Compared with Example 1, in the lithium-ion battery and the reference battery of Example 8, σ = 6 mS·cm⁻¹, and η = 5 Pa·s.

### Example 9

Compared with Example 1, in the lithium-ion battery and the reference battery of Example 9, h = 25 µm, and m = 4 mg·cm⁻².

### Example 10

Compared with Example 1, in the lithium-ion battery and the reference battery of Example 10, h = 60 µm, and m = 10 mg·cm⁻².

### Comparative Example 1

Compared with Example 1, in the lithium-ion battery and the reference battery of Comparative Example 1, there is no metal ion of which the Stokes radius was smaller than that of the lithium ion.

### Product parameters of Examples 1-10 and Comparative Example 1.

**Table 1: product parameters of Examples 1-10 and Comparative Example 1**

| | CB | Metal ion | C (M) | σ (mS·cm⁻¹) | η (Pa·s) | h (µm) | m (mg·cm⁻²) |
|---|---|---|---|---|---|---|---|
| Example 1 | 1.12 | K⁺ | 0.03 | 9.5 | 3.9 | 54 | 8.6 |
| Example 2 | 1.06 | K⁺ | 0.03 | 9.5 | 3.9 | 54 | 8.6 |
| Example 3 | 1.24 | K⁺ | 0.03 | 9.5 | 3.9 | 54 | 8.6 |
| Example 4 | 1.32 | K⁺ | 0.03 | 9.5 | 3.9 | 54 | 8.6 |
| Example 5 | 1.12 | K⁺ | 0.012 | 9.7 | 3.82 | 54 | 8.6 |
| Example 6 | 1.12 | K⁺ | 0.05 | 9.1 | 3.95 | 54 | 8.6 |
| Example 7 | 1.12 | Na⁺ | 0.03 | 9.5 | 3.9 | 54 | 8.6 |
| Example 8 | 1.12 | K⁺ | 0.03 | 6 | 5 | 54 | 8.6 |
| Example 9 | 1.12 | K⁺ | 0.03 | 9.5 | 3.9 | 25 | 4 |
| Example 10 | 1.12 | K⁺ | 0.03 | 9.5 | 3.9 | 60 | 10 |
| Comparative Example 1 | 1.12 | / | / | 9.5 | 3.9 | 54 | 8.6 |

In Table 1, the "CB value" represented the CB value of the lithium-ion battery and reference battery, and the "metal ion" represented the metal ion in the electrolyte solution of which the Stokes radius was smaller than that of the lithium ion. The "C" represented the molar concentration of the metal ion in the electrolyte solution, the "σ" represented the conductivity of the electrolyte solution at normal temperature, the "η" represents the viscosity of the electrolyte solution at normal temperature, the "h" represented the thickness of the negative-electrode film layer, and the "m" represented the load of the negative-electrode film layer on the negative-electrode current collector.

A battery performance test was conducted on the aforementioned embodiments and comparative examples. The measured performance data was detailed in Table 2.

**Table 2: product parameters of Examples 1-10 and Comparative Example 1**

| | Critical non-lithium plating SOC of reference battery | Critical non-lithium plating SOC of lithium-ion battery | SOC difference |
|---|---|---|---|
| Example 1 | 40% | 38% | 2% |
| Example 2 | 37% | 35% | 2% |
| Example 3 | 42% | 39% | 3% |
| Example 4 | 45% | 41% | 4% |
| Example 5 | 41% | 39% | 2% |
| Example 6 | 39% | 38% | 1% |
| Example 7 | 39% | 36% | 3% |
| Example 8 | 32% | 28% | 4% |
| Example 9 | 57% | 55% | 2% |
| Example 10 | 35% | 33% | 2% |
| Comparative Example 1 | 41% | 33% | 8% |

In Table 2, the "critical no-lithium plating SOC of reference battery" represented the state of charge of the reference battery when lithium plating was about to occur at the negative electrode of the reference battery as measured by the charging capacity test, the "critical no-lithium plating SOC of lithium-ion battery" represented the state of charge of the lithium-ion battery when lithium plating was about to occur at the negative electrode of the lithium-ion battery as measured by the charging capacity test, and the "SOC difference" represented the difference between the critical no-lithium plating SOC of reference battery and the critical no-lithium plating SOC of lithium-ion battery. The "lithium plating was about to occur" meant that in the process of the charging capacity test of a lithium-ion battery or a reference battery under a certain current, if more electricity is charged at the current, a lithium plating state would occur at the negative electrode.

The charging capacity test of the reference battery in Table 2 could be carried out in the following steps: in a thermostat at 25°C, the positive and negative electrodes of the reference battery were connected, and the reference battery was charged at a constant current of 0.33 C to 4.2 V, then charged at a constant voltage of 4.2 V to a current less than or equal to 0.05 C, allowed to stand for 10 min, and then discharged at a constant current of 0.33 C to 2.5 V. At this time, the state of charge of the battery was recorded as 0% SOC.

Starting from the state of charge of the reference battery at 0% SOC, the reference battery was charged at a constant current of 4 C. The charging was stopped when the potential at the negative electrode reached 0 mV compared to the potential of the reference electrode, and the state of charge of the battery at the time of charging cutoff was recorded. The state of charge was the critical non-lithium plating SOC of the reference battery in Example 1. The critical non-lithium plating SOC of the reference battery could represent the theoretical charging capacity of the lithium-ion battery in Example 1.

The charging capacity test of the lithium-ion battery in Table 2 could be carried out in the following steps:
multiple identical lithium-ion batteries were prepared and cycling tests were performed on the multiple lithium-ion batteries. The specific test conditions were as follows: in a thermostat at 25°C, the lithium-ion batteries were allowed to stand for 2 h, then discharged at a constant current of 0.33 C to 2.5 V, allowed to stand for 5 min, then respectively charged at a constant current of 4 C to different states of charge, then charged at a constant current of 0.33 C to 4.2 V, and then charged at a constant voltage of 4.2 V to a current less than or equal to 0.05 C. After 50 cycles, the multiple lithium-ion batteries were disassembled to observe whether lithium plating occurred on the negative electrode plate. In the step of respectively charging the multiple lithium-ion batteries at a constant current to different states of charge, the multiple different states of charge were set according to the critical non-lithium plating SOC of the reference battery. For example, if the critical non-lithium plating SOC of the reference battery was measured to be 50%, then the multiple different states of charge could be set to multiple numerical values less than or equal to 50%, and illustratively, 49%, 48%, 47%, 46%, etc. The number of the lithium-ion batteries used for testing could be set according to the test requirements. For example, 5, 10, or 15 lithium-ion batteries could be subjected to the cycling test. It should be understood that the lithium-ion battery after 50 cycles was in a fully charged state, that was, the battery had been charged to 4.2 V and charged at a constant voltage of 4.2 V to a current less than or equal to 0.05 C.

By performing the cycling test on the aforementioned multiple identical lithium-ion batteries, negative electrode plates of the lithium-ion batteries charged to multiple different SOCs and cycled were obtained, and the negative electrode plates corresponding to two adjacent SOCs respectively exhibited lithium-plating and non lithium-plating phenomena. The SOC corresponding to the negative electrode plate without lithium plating was recorded as the critical no-lithium plating SOC of the lithium-ion battery.

The test methods for the physical and chemical parameters and the performance parameters involved in the examples of the present application are briefly introduced hereafter. It should be understood that the following test methods were only illustrative, and other test methods well known in the art might also be used for testing.

### 1. Method of testing CB value

According to the embodiments of the present application, the negative-electrode reversible capacity test was determined by the following steps: taking a single-sided coated negative electrode plate, and cutting it into round sheets with a diameter of 14 mm. A button battery was assembled in a glove box, where lithium metal discs were as counter electrodes, and the electrolyte solution prepared above was adopted. The battery was allowed to stand at 25°C for 6 h, discharged at a constant current and at a rate of 0.1 C to 5 mV, then discharged at a constant current and at 0.01 C to 5 mV, then allowed to stand for 5 min, and charged at a constant current and at a rate of 0.1 C to 0.7 V. The charging capacity was recorded as Ca in mAh.

According to the embodiments of the present application, the positive-electrode reversible capacity test could be determined by the following steps: taking a single-sided coated positive electrode plate, and cutting it into round sheets with a diameter of 14 mm. A button battery was assembled in a glove box, where lithium metal discs were as counter electrodes, and the electrolyte solution prepared above was adopted. The battery was allowed to stand at 25°C for 6 h, charged at a constant current and at a rate of 0.1 C to 4.25 V, then charged at a constant current and at a rate of 0.05 C to 4.25 V, then allowed to stand for 5 min, and discharged at a constant current and at a rate of 0.1 C to 2.8 V. The discharging capacity was recorded as Cc in mAh.

The CB value of the battery could be calculated according to the formula CB = Ca/Cc. Ca was the charging capacity obtained by the negative-electrode reversible capacity test, and Cc was the discharging capacity obtained by the positive-electrode reversible capacity test.

### 2. Method for testing molar concentration

The molar concentration of the metal ion in the electrolyte solution could be determined by various methods such as titration, electrochemical analysis, spectrophotometry, and inductively coupled plasma.

Illustratively, the test method was in accordance with HG/T 4067-2015, and the process of adopting the ICP (Inductively coupled plasma) test method was as follows: the sample to be tested was digested with aqua regia (concentrated hydrochloric acid: concentrated nitric acid = 3:1) or reverse aqua regia (concentrated nitric acid: concentrated hydrochloric acid of 3:1), and then measured for element contents with an ICP tester.

### 3. Method of testing viscosity of electrolyte solution

For specific test methods, please refer to "Viscosity Measurement Method": GB/T 10247-2008.

### 4. Method of testing conductivity of electrolyte solution

The test method was in accordance with HG/T 4067-2015. The conductivity of the electrolyte solution to be tested was tested with a conductivity meter: about 100 ml of the sample to be tested was taken from a dry, clean and corrosion-resistant sample bottle, and sealed in a constant-temperature water bath at 25 ± 0.5°C. When the temperature of the sample to be tested was constant, the cap of the sample bottle was replaced with a rubber stopper in which an electrode was inserted. When the temperature was within the range of 25 ± 0.5°C, the data was read, which was the conductivity of the sample to be tested.

### 5. Method of testing load

The negative electrode plate was cut to a specified area S and weighed to have a mass of m1. The film layer on the surface of the negative-electrode current collector was washed off, the negative-electrode current collector was weighed to have a mass of m2, and the load of the negative-electrode film layer on the negative-electrode current collector was (m1 - m2)/S.

According to the comparative analysis of Examples 1-10 and Comparative Example 1, it could be seen from the charging capacity tests of the Examples and the Comparative Examples that in the Examples, the critical no-lithium plating SOCs of the lithium-ion batteries and the critical no-lithium plating SOCs of the reference batteries were relatively close with small differences, indicating that the charging capacities of the lithium-ion batteries in the Examples were close to their theoretical charging capacities. In other words, the lithium-ion batteries in the Examples could give full play to their charging capacities. In the Comparative Examples, the critical no-lithium plating SOCs of the lithium-ion batteries were significantly different from those of the reference batteries, indicating that the charging capacities of the lithium-ion batteries in the Comparative Examples were poor. In other words, the lithium-ion batteries in the Comparative Examples could not exert their charging capacities. Thus, it indicated that by introducing the metal ion with a Stokes radius smaller than that of the lithium ion into the electrolyte solution and controlling the CB value of the lithium-ion battery within a suitable range, lithium plating could be effectively suppressed and the charging capacity of the lithium-ion battery could be improved.

According to the comparative analysis of Examples 1-4, it could be seen that as the CB value increased, the critical no-lithium plating SOC of the lithium-ion battery increased, proving that increasing the CB value could increase the lithium intercalation sites on the negative electrode plate, and reduce the risk of lithium plating in the lithium-ion battery, thereby improving the critical no-lithium plating SOC of the lithium-ion battery.

According to the comparative analysis of Examples 1, and 5-6, it could be seen that the concentration of the metal ion in Example 5 was lower, while the concentration of the metal ion in Examples 1 and 6 was higher. Therefore, the inhibition of lithium plating by the metal ion and the improvement of fast charging performance in Examples 1 and 6 were better than those in Example 5, and the critical no-lithium plating SOCs of the lithium-ion batteries of Examples 1 and 6 were greater than that of Example 5. The performance data of Examples 1 and 6 were not much different, indicating that within a certain range, an increase in the concentration of the metal ions was beneficial to inhibiting lithium plating and improving the charging capacity of the lithium-ion battery.

Example 7 demonstrated that the introduction of the sodium ion into the electrolyte solution had a similar effect as the potassium ion.

According to the comparative analysis of Examples 1 and 8, it could be seen that when the conductivity of the electrolyte solution was low, the critical no-lithium plating SOC of the lithium-ion battery was also small, indicating that selecting an electrolyte solution with a larger conductivity helped to improve concentration polarization and thus inhibit lithium plating, thereby helping to improve the charging capacity of the lithium-ion battery.

According to the comparative analysis of Examples 1 and 9-10, it could be seen that Example 9 with the smallest thickness of the negative-electrode film layer had the largest critical no-lithium plating SOC of the lithium-ion battery, indicating that the smaller the thickness of the negative-electrode film layer, the more conducive it was to the diffusion and infiltration of the electrolyte solution, which could effectively reduce the concentration polarization in the thickness direction of the negative electrode plate, reduce the risk of lithium plating on the negative electrode plate, and improve the charging capacity of the lithium-ion battery.

While the present application has been described with reference to the preferred embodiments, various modifications may be made and components thereof may be replaced with equivalents without departing from the scope of the present application. In particular, the technical features mentioned in the various Examples can be combined in any manner as long as there is no structural conflict. The present application is not limited to the particular embodiments disclosed herein, but rather includes all technical solutions falling within the scope of the claims.

## Claims

1. A lithium-ion battery comprising:
an electrolyte solution comprising a metal ion, wherein a Stokes radius of the metal ion is smaller than that of a lithium ion;
a CB value of the lithium-ion battery satisfies: 1.06 ≤ CB ≤ 1.32, and the CB value is a ratio of a capacity of a negative-electrode active material per unit area to a capacity of a positive-electrode active material per unit area.

2. The lithium-ion battery according to claim 1, wherein a molar concentration C of the metal ion in the electrolyte solution satisfies: 0.012 M ≤ C ≤ 0.05 M.

3. The lithium-ion battery according to claim 1 or 2, wherein the metal ion comprises at least one of K⁺ and Na⁺; and optionally, the metal ion comprises K⁺.

4. The lithium-ion battery according to any one of claims 1-3, wherein the conductivity σ of the electrolyte solution at normal temperature (25°C) satisfies: σ ≥ 6 mS·cm⁻¹.

5. The lithium-ion battery according to any one of claims 1-4, wherein the viscosity η of the electrolyte solution at normal temperature (25°C) satisfies: η ≤ 5 Pa·s.

6. The lithium-ion battery according to any one of claims 1-5, wherein the lithium-ion battery comprises a negative electrode plate, and the negative electrode plate comprises a negative-electrode current collector and a negative-electrode film layer disposed on the negative-electrode current collector.

7. The lithium-ion battery according to claim 6, wherein a thickness h of the negative-electrode film layer satisfies: 25 µm ≤ h ≤ 60 µm.

8. The lithium-ion battery according to claim 6 or 7, wherein a load m of the negative-electrode film layer on the negative-electrode current collector satisfies: 4 mg·cm⁻² ≤ m ≤ 10 mg·cm⁻².

9. The lithium-ion battery according to any one of claims 1-8, wherein the electrolyte solution comprises an inorganic salt, and the inorganic salt comprises the metal ion and an anion.

10. The lithium-ion battery according to claim 9, wherein the anion comprises at least one of hexafluorophosphate, tetrafluoroborate, perchlorate, nitrate, carbonate, bistrifluoromethylsulfonyl imide, trifluoromethanesulfonate, difluoro oxalate borate, dioxalate borate, methanesulfonate and a halogen anion.

11. An electrical apparatus comprising the lithium-ion battery according to any one of claims 1-10.
